# EUROPÄISCHE PATENTANMELDUNG

(11) **EP 1 577 995 A1**
(43) Veröffentlichungstag der Anmeldung: **21.09.2005**
(21) Anmeldenummer: 04405727.1
(22) Anmeldetag: 23.11.2004
(51) Int. Cl.: H02G 3/04

(54) **Vorrichtung zur Befestigung von Kabel**

(30) Priorität: 02.12.2003 CH 20572003
(71) Anmelder: ZURECON AG, CH-8003 Zürich (CH)
(72) Erfinder: Pfluger, Gerd, 4625 Oberbuchsiten (CH)
(74) Vertreter: Rutz & Partner

(57) **Zusammenfassung**

Die als Kabelleiter, Kabelbahn oder Kabelkanal ausgestaltete Vorrichtung, die der Befestigung von Kabel (90, 91, 92, 93) dient, weist ein oder mehrere Montageteile (1; 1', 1'') auf, wie zueinander parallel angeordnete Sprossen, ein Blech oder ein Gitter, die mit einem Gebäudeteil verbindbar sind, und an denen gegebenenfalls Kabel befestigbar sind. Erfindungsgemäss sind die Montageteile (1; 1', 1'') fest oder gelenkig mit wenigstens einer aus Längsstegen (31) sowie Querstegen (32) bestehenden Gitterstruktur (3) derart verbunden, dass die Gitterstruktur (3), an der Kabel (90, 91, 92, 93) befestigbar sind, ganz oder teilweise in den vor den Montageteilen (1; 1', 1'') liegenden, für die Verlegung der Kabel vorgesehenen Raum hineinragt.

## Beschreibung

Die Erfindung betrifft eine insbesondere für Steigzonen vorgesehene Vorrichtung zur Befestigung von Kabel nach dem Oberbegriff des Patentanspruchs 1.

In Gewerbe- Industrie- und Verwaltungsgebäuden werden Kabel, insbesondere Kabel für Stark- und Schwachstromnetze, infolge fehlender Eigenstabilität in Kabelführungsvorrichtungen hinein gelegt und so beispielsweise von einem Schaltfeld einer Zentrale zu den Verbrauchern geführt.

Zur Versorgung der einzelnen Geschosse eines Gebäudes werden die Strom-, Steuer-, Kommunikationskabel und gegebenenfalls weitere Kabel und Leitungen in Steigzonen von einem ersten zu einem zweiten Geschoss geführt und an Vorrichtungen befestigt, wie sie in [1], Produktkatalog der LANZ OENSINGEN AG, April 2003; auf Seiten 44 bis 48 gezeigt sind.

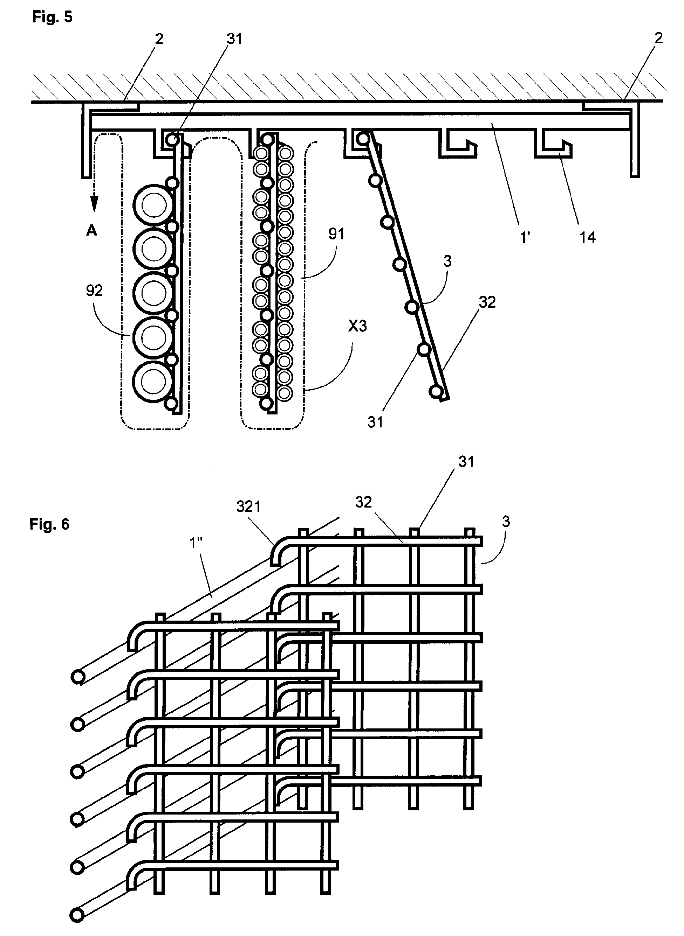

Bei mittleren und grösseren Kabelmengen werden in Steigzonen oft die in [1], Seite 44 gezeigten U-förmig ausgestalteten Gitterbahnen oder leiterartigen Multibahnen verwendet, die aus zwei L-Profilen und dazwischen gehaltenen Sprossen, beispielsweise den in [1], Seite 45 gezeigten C-Sprossen oder Kombisprossen bestehen. Die nachstehend in Figur 4 dargestellten Kombisprossen 100 erlauben die Befestigung von Kabelbindern 81, Schnellverbindern 82 und Ordnungstrennbolzen 83, mittels denen Kabel 90 befestigt und/oder geordnet verlegt werden können.

Sofern genügend Platz vorhanden ist, werden die Kabel nebeneinander angeordnet. Fehlt dazu der Platz bei der Erstinstallation oder bei späteren Nachinstallationen, so werden normalerweise mehrere Kabel zu Kabelbünden zusammengefasst.

Kabelbünde sind aus verschiedenen Gründen jedoch unvorteilhaft. Die Übersicht über die installierten Kabel geht verloren, so dass die Arbeit des Installateurs bei Nachinstallationen erheblich erschwert wird. Die Erstellung der Kabelbünde, insbesondere aber der Austausch eines gegebenenfalls mangelhaften Kabels ist mit weiterem Aufwand verbunden. Kabelbünde sind ferner unelastisch und daher schwer verlegbar. An engen Kurvenradien entstehen zudem oft hohe Zugoder Druckbelastungen an peripher liegenden Kabeln, so dass deren Eigenschaften gegebenenfalls beeinträchtigt werden. Weiterhin können zwischen verschiedenen Kabeln eines Kabelbundes, beispielsweise durch Induktion, störende Wechselwirkungen auftreten, wodurch in Datenkabel gegebenenfalls Übertragungsfehler verursacht werden. Zudem können sich innen liegende Kabel unzulässig erwärmen.

Der vorliegenden Erfindung liegt daher die Aufgabe zugrunde, eine verbesserte, insbesondere für Steigzonen vorgesehene Vorrichtung zur Befestigung von Kabel zu schaffen.

Es ist eine Befestigungsvorrichtung zu schaffen, die bei kleinem Raumbedarf eine hohe Kapazität für die Aufnahme und stabile Befestigung gleichartiger oder verschiedenartiger Kabel aufweist, ohne dass Kabelbünde gemacht werden müssen.

Die Befestigungsvorrichtung soll eine geordnete und übersichtliche Verlegung der Kabel bei der Erstinstallation und bei Nachinstallationen oder Reparaturen erlauben. Für die Nachinstallationen sollen genügend Reserve-Befestigungsmöglichkeiten für die Kabel vorhanden sein.

Die zur Befestigung von Kabel ein- oder beidseitig verfügbaren bzw. nutzbaren Flächen, die erfindungsgemäss durch I-, L-, U-, Z- oder andersförmige Gitterstrukturen gebildet werden, und welche so die Aufnahmekapazität der Befestigungsvorrichtung bestimmen, sollen vorzugsweise skalierbar sein, so dass die Befestigungsvorrichtung bei der Erstinstallation, und dann auch bei Nachinstallationen den jeweils vorliegenden Bedürfnissen angepasst werden kann.

Diese Aufgabe wird mit einer Vorrichtung gelöst, welche die in Anspruch 1 angegebenen Merkmale aufweist. Vorteilhafte Ausgestaltungen der Erfindung sind in weiteren Ansprüchen angegeben.

Die als Kabelleiter, Kabelbahn oder Kabelkanal ausgestaltete Vorrichtung, die der Befestigung von Kabel dient, weist ein oder mehrere Montageteile auf, wie zueinander parallel angeordnete Sprossen, ein Blech oder ein Gitter, die mit einem Gebäudeteil verbindbar sind, und an denen gegebenenfalls Kabel befestigbar sind.

Erfindungsgemäss sind die Montageteile fest oder gelenkig mit wenigstens einer aus Längsstegen sowie Querstegen bestehenden Gitterstruktur derart verbunden, dass die Gitterstruktur, an der Kabel befestigbar sind, ganz oder teilweise in den vor den Montageteilen liegenden, für die Verlegung der Kabel vorgesehenen Raum hineinragt.

Anstelle nur einer Ebene zur Befestigung der Kabel nutzt die Befestigungsvorrichtung einen Raum zur Befestigung der Kabel, der durch entsprechende Wahl und Montage einer oder mehrerer Gitterstrukturen verändert werden kann. Durch den Einsatz der mit den Montageteilen verbundenen wenigstens einen Gitterstruktur resultiert somit eine signifikante Vergrösserung der Fläche bzw. der Abwicklung der Befestigungsvorrichtung, an der die zu installierenden Kabel geordnet montierbar sind.

In einer vorzugsweisen Ausgestaltung sind die Querstege einoder mehrfach gekrümmt sind, so dass die Gitterstruktur wenigstens zwei gegeneinander geneigte, der Befestigung der Kabel dienende Flügel gleicher oder unterschiedlicher Länge aufweist, von denen zumindest einer in den für die Verlegung der Kabel vorgesehenen Raum hineinragt.

Die Gitterstruktur kann mit einem Flügel in die Montageteile, beispielsweise in Sprossen eingehängt werden, wonach der andere Flügel vorzugsweise senkrecht nach aussen ragt und beidseitig Montageflächen zur Befestigung der Kabel bietet. Möglich ist ferner, beide Flügel der Gitterstruktur in der Befestigungsvorrichtung zu verankern.

Bei Gitterstrukturen mit ungleich langen Flügeln kann durch entsprechende Montage bei der Erstinstallation oder bei Nachinstallationen bestimmt werden, um welches Mass die Gitterstruktur nach vorne ragen soll, so dass eine optimale Ausnutzung des Raumes in den Steigzonen möglich ist.

Durch Verwendung von mehreren Gitterstrukturen ist eine einfachere Unterteilung der Kabelkategorien und/oder ein späterer Ausbau der Befestigungsvorrichtung realisierbar. Die Aufnahmekapazität der Befestigungsvorrichtungen ist daher beliebig skalierbar. Die Unterteilung der zu verlegenden Kabel kann bedarfsgemäss erfolgen, geordnet nach Bestimmungsort, Funktion der Kabel, Kabeldicken oder Kabeleigenschaften. Die Kabel können dabei in bekannter Weise, beispielsweise mit Kabelbindern oder Schnellverbindern, einseitig oder beidseitig an den Flügeln der Gitterstruktur befestigt werden.

In einer bevorzugten Ausgestaltung sind die Längsstege an der gegebenenfalls den Sprossen zugewandten Aussenseite der Querstege befestigt, so dass sie in die senkrecht dazu ausgerichteten Haken eingehängt werden können, ohne dass diese Haken in den Bereich hineinragen, in dem die Kabel angeordnet sind. Verletzungen der Kabel bei deren Verlegung werden daher vermieden.

Einander benachbarte Haken, beispielsweise einer U-Profil-förmigen, mit zwei Hakenreihen versehenen Sprosse, weisen einen festen gegenseitigen Abstand auf, der einem Grundmass entspricht, so dass alle Längsstege von Gitterstrukturen, deren gegenseitiger Abstand diesem Grundmass oder einem ganzzahligen Vielfachen davon entspricht, eingehängt und fixiert werden können.

Die beispielsweise I-, L-, U- oder Z-förmig ausgestalteten Gitterstrukturen bestehen vorzugsweise aus runden oder abgekanteten, gegebenenfalls mit Kunststoff beschichteten Längs- und/oder Querstegen, die vorzugsweise derart gewählt sind, dass beim Einschieben der Längs- oder Querstege in die Öffnungen der Haken ein Presssitz resultiert, durch den die Gitterstruktur fixiert wird.

Das Mittelstück und/oder die Seitenstücke der Sprossen sind vorzugsweise mit Öffnungen versehen, in die Arretierelemente für die montierte Gitterstruktur, Montageelemente für weitere Vorrichtungen, gegebenenfalls Informationstafeln, oder der Verbindung mit den Seitenprofilen dienende Verbindungselemente einführbar sind.

Die Montageteile können direkt an einem Gebäudeteil montiert werden. Vorzugsweise werden die Montageteile jedoch beidseitig von Seitenprofilen, beispielsweise L-Profilelementen, gehalten, die selbst mit dem Gebäudeteil verbunden werden.

Nachfolgend wird die Erfindung anhand von Zeichnungen näher erläutert. Dabei zeigt:
- Figur 1: eine erfindungsgemässe Befestigungsvorrichtung mit zwei Seitenprofilen 2 und dazwischen gehaltenen, mit Haken 14 versehenen Sprossen 1, an denen drei der Befestigung von Kabeln 90, 91, 92 dienende Gitterstrukturen 3 befestigt sind;
- Figur 2a-2e: erfindungsgemässe Befestigungsvorrichtungen aus axialer Sicht gesehen, mit L- und U-förmigen Gitterstrukturen 3, die angepasst an die Raumverhältnisse in der Steigzone in die Sprossen 1 eingehängt sind;
- Figur 3a,b: die für die Befestigung von Kabel nutzbare Abwicklung X1 einer bekannten Befestigungsvorrichtung im Vergleich zu der für die Befestigung von Kabel nutzbaren Abwicklung X2 einer erfindungsgemässen Befestigungsvorrichtung;
- Figur 4: eine als Kabelbahn ausgestaltete Befestigungsvorrichtung mit einer darin verankerten Gitterstruktur 3;
- Figur 5: eine erfindungemässe Befestigungsvorrichtung mit drehbar gelagerten Gitterstrukturen 3; und
- Figur 6: eine erfindungemässe Befestigungsvorrichtung mit Gitterstrukturen 3, die in ein Gitter 1" eingehängt sind.

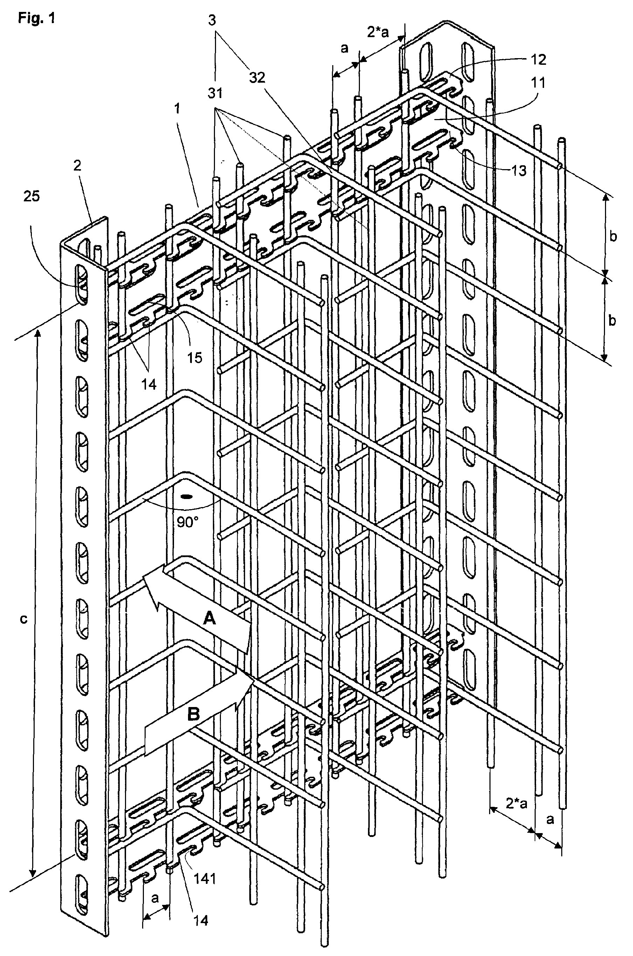

Figur 1 zeigt eine in einer Steigzone angeordnete Befestigungsvorrichtung, die zwei gegeneinander geöffnete, L-förmige Seitenprofile 2 aufweist, zwischen denen zwei mit Haken 14 versehene Sprossen 1 gehalten sind. An den beiden Sprossen 1, die als Montageteile dienen, sind drei der Befestigung von Kabel 90, 91, 92 dienende, identische Gitterstrukturen 3 befestigt, welche gleich ausgerichtet, jedoch seitlich gegeneinander versetzt sind.

In hohen Steigzonen erstrecken sich die Seitenprofile 2 normalerweise über längere Distanzen und sind daher mit mehreren Sprossen versehen. Die Länge der Gitterstrukturen 3 entspricht vorzugsweise etwa dem Abstand c benachbarter Sprossen 1 oder einem ganzzahligen Vielfachen davon.

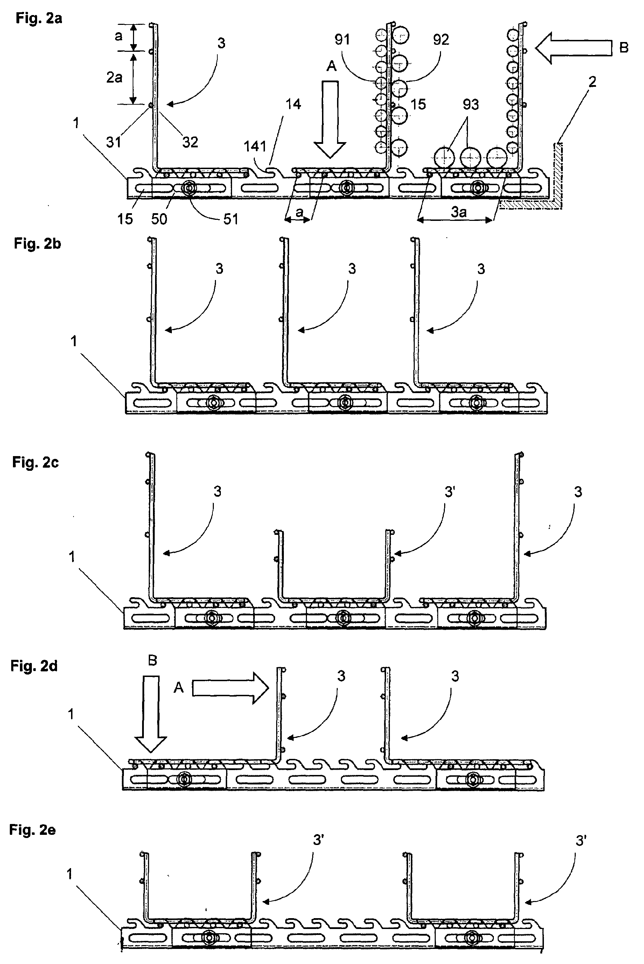

Die Gitterstruktur 3 besteht aus je parallel zueinander angeordneten und miteinander verbundenen, vorzugsweise verschweissten Längsstegen 31 sowie Querstegen 32. Die Querstege 32, die in die Öffnungen 141 der betreffenden Haken 14 eingeführt bzw. eingehängt sind, sind L-förmig gebogen bzw. gekrümmt und an den resultierenden Aussenseiten mit den senkrecht dazu verlaufenden Längsstegen 31 verbunden, so dass die Gitterstruktur 3 wenigstens zwei gegeneinander geneigte, der Befestigung der Kabel dienende Flügel A, B unterschiedlicher Länge aufweist. Die kürzeren Flügel A der in Figur 1 gezeigten Gitterstrukturen 3 liegen parallel an den Sprossen 1 an und bilden frontseitig eine sich zwischen den Seitenprofilen 2 erstreckende Befestigungsfläche. Die längeren Flügel B der Gitterstrukturen 3 ragen senkrecht dazu nach aussen und beanspruchen den Raum, um so die Befestigungsflächen zu vervielfachen. Aus den Figuren 1 und 2a bis 2e ist ersichtlich, dass die Abmessungen der Haken 14 derart gewählt sind, dass die Haken 14 die Querstege 32 nicht überragen und in den Raum eintreten, in dem die Kabel 90, 91, 92, 93 angeordnet sind, so dass Schadwirkungen der Haken 14 auf die Kabel 90, 91, 92, 93 vermieden werden.

Die U-Profil-förmigen Sprossen 1 weisen ein Mittelstück 11 auf, durch das zwei je mit einer Reihe von Haken 14 versehene Seitenstücke 12, 13 miteinander verbunden sind. Die in die Seitenstücke 12, 13 eingearbeiteten und parallel dazu ausgerichteten Haken 14 weisen Öffnungen 141 auf, die nur von einer Seite her zugänglich sind. Die Öffnungen 141 der Haken 14 sind in den gezeigten Ausgestaltungen etwa schuhförmig ausgestaltet, so dass ein Längssteg 31 in eine Öffnung 141 eingeführt und nach rechts unter den nach links ausgerichteten Haken 14 verschoben werden kann. Die Abmessungen der Öffnungen 141 und der Längsstege 31 sind vorzugsweise derart gewählt, dass nach dem Einschieben der Längsstege 31 ein Presssitz resultiert bzw. die Längsstege 31 durch die Haken 14 festgeklemmt werden.

Die Längsstege 31 können rund oder abgekantet oder mit Kunststoff beschichtet sein, welcher beim Einschieben der Längsstege 31 in die Öffnungen 141 elastisch deformiert wird. Mittels Arretier- oder Verbindungselementen 50, 51 (siehe Figur 2a), gegebenenfalls Kabelbindern, die in Öffnungen 15 der Sprosse 1 einführbar sind, können die Gitterstrukturen 3 gesichert werden. Die in die Öffnungen 15 eingeführten Verbindungselemente 50, 51 können ferner zur Montage oder Befestigung weiterer Vorrichtungen verwendet werden. Beispielsweise können zwischen den Sprossen 1 Informationstafeln befestigt werden.

Zur stabilen Montage einer Gitterstruktur 3 ist es notwendig, dass an dem zu befestigenden Flügel A oder B zwei oder mehrere Längsstege 31 derart angeordnet sind, dass sie in die Öffnungen 141 der Haken 1 eingeführt werden können, die in einem festen gegenseitigen Abstand, der einem Grundmass a entspricht, an den Sprossen 1 positioniert sind. Die Längsstege 31 der Flügel A oder B der Gitterstrukturen 3 weisen daher einen gegenseitigen Abstand auf, der dem Grundmass a oder einem ganzzahligen Vielfachen n*a davon entspricht, so dass gewährleistet ist, dass die Längsstege 31 positionsgleich in die Öffnungen 141 der Haken 14 eingeführt und fixiert werden können.

Benachbarte Querstege 32 sind vorzugsweise in einem Abstand b voneinander angeordnet, der derart gewählt ist, dass die Gitterstruktur 3 stabil ist, die Kabel gut gestützt sind und bequem befestigt werden können, und so, dass Kollisionen zwischen den Haken 14 und den Querstegen 32 vermieden werden.

Die Sprossen 1 können allenfalls direkt an das Mauerwerk befestigt werden, so dass die Seitenprofile 2 nicht erforderlich sind. Wenn Seitenprofile 2 eingesetzt werden, so sind zur Befestigung der Montageteile 1; 1', 1" verschiedenartige Seitenprofile 2 verwendbar. Die in Figur 1 gezeigten, gegeneinander geöffneten Seitenprofile 2 weisen die Form eines L auf und sind mit Öffnungen 25 versehen, die der Durchführung von Montagematerial, gegebenenfalls Montageschrauben und Kabelbinder dienen. Wesentlich für die Seitenprofile 2 ist daher, dass die Sprossen 1 stabil montiert werden können.

Die Figuren 2a bis 2e zeigen die Befestigungsvorrichtung in axialer Richtung mit verschiedenartig ausgestalteten und montierten Gitterstrukturen 3.

In Figur 2a sind die drei Gitterstrukturen 3 von Figur 1 gezeigt, deren längere Flügel B nach aussen ragen. Die linken beiden Gitterstrukturen 3 sind gegeneinander geöffnet, so dass dazwischen ein breiter Kanal gebildet wird. Die an der rechten Seite angeordnete Gitterstruktur 3 ist gegen den Flügel B der mittleren Gitterstruktur 3 gerichtet, so dass dazwischen ein schmaler Kanal gebildet wird. Wie in Figur 2a gezeigt, werden Kabel 91, 92 mit kleinerem Querschnitt vorzugsweise an den nach aussen ragenden Flügeln der Gitterstruktur 3 und Kabel 93 mit grösserem Querschnitt vorzugsweise an den Flügeln der Gitterstruktur 3 befestigt, die an den Sprossen 1 anliegen.

Figur 2b zeigt die Befestigungsvorrichtung von Figur 1 von oben.

Figur 2c zeigt U-Profil-förmige Gitterstrukturen 3', die mit dem Mittelstück an den Sprossen 1 anliegen und die einen kleineren Kanal bildet, der beispielsweise zur gesonderten Verlegung von Kommunikationskabel verwendbar ist.

Figur 2d zeigt die Befestigungsvorrichtung mit zwei Gitterstrukturen 3 von Figur 1, deren längere Flügel B an den Sprossen 1 anliegen. Diese Anordnung wird beispielsweise in Steigzonen gewählt, in denen nur wenig Raum vorhanden ist.

Figur 2e zeigt eine Befestigungsvorrichtung mit zwei U-Profil-förmige Gitterstrukturen 3'.

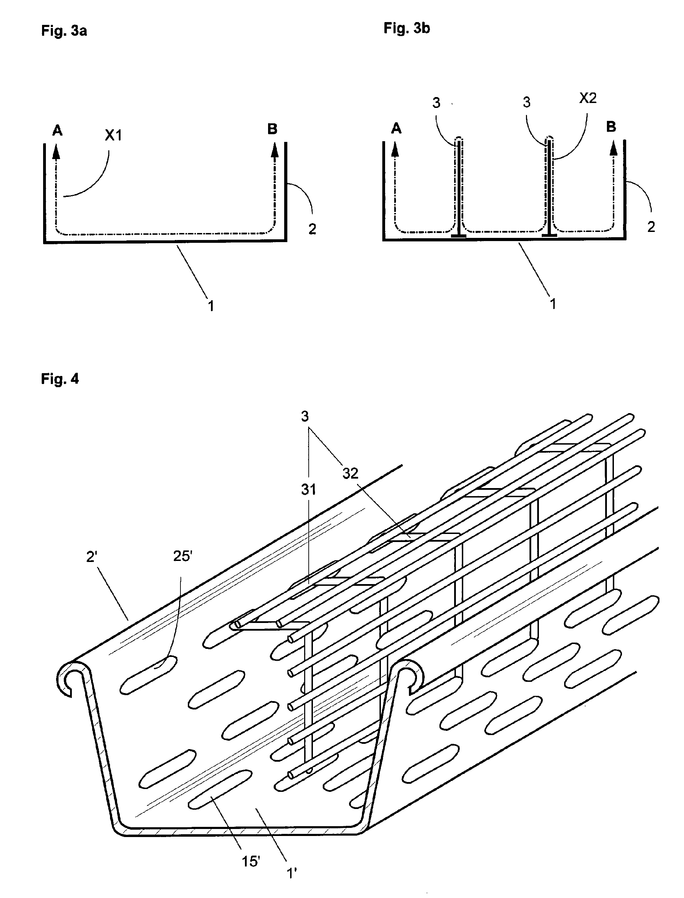

Figur 3 zeigt die für die Befestigung von Kabel nutzbare Abwicklung X1 einer bekannten Befestigungsvorrichtung im Vergleich zu der für die Befestigung von Kabel nutzbaren Abwicklung X2 einer erfindungsgemässen Befestigungsvorrichtung. Dabei ist ersichtlich, dass durch die erfindungsgemässen Massnahmen beim vorliegenden Beispiel etwa eine Verdoppelung der Abwicklungsfläche und eine stark verbesserte Raumnutzung resultiert. Ausgehend von diesem Erfindungsgedanken sind daher weitere vorteilhafte Ausgestaltungen der Erfindung realisierbar.

Wie in Figur 4 gezeigt, können erfindungsgemässe Gitterstrukturen 3 auch in anderen Kabelführungsvorrichtungen, beispielsweise in Kabelbahnen (siehe [1], Seite 3K) montiert werden. Auch bei diesen Kabelführungsvorrichtungen, die Seitenprofile 2' und ein dazwischen gehaltenes, Montageteil, beispielsweise ein gelochtes Blech 1' aufweisen, ist anhand der montierten Gitterstrukturen 3 daher eine geordnete räumliche Verlegung der Kabel 90, 91, 92, 93 möglich.

Die Figuren 5 und 6 zeigen, dass auch flache, nicht abgekantete Gitterstrukturen 3 verwendbar sind, die einseitig an Montageteilen 1' bzw. 1" befestigt werden.

In Figur 5 ist ein Montageteil 1' mit Rastelementen 14 gezeigt, in die ein erster Längssteg 31 einer ebenen Gitterstruktur 3 eingerastet ist, so dass ein Quersteg 32 der Gitterstruktur 3 auf dem betreffenden Rastelemente 14 ruht und die Gitterstruktur 3, die um den ersten Längssteg 31 drehbar ist, senkrecht in dieser Position hält. Durch die Verwendung der flachen Gitterstrukturen 3 resultiert eine um ein mehrfaches grössere Abwicklungsfläche X3. Gut erkennbar ist ferner die hohe Skalierbarkeit der Befestigungsvorrichtung. Bei der Erstinstallation wird beispielsweise nur jedes zweite Rastelement 14 mit einer Gitterstruktur 3 bestückt wird. Bei Nachinstallationen können daher bedarfsweise weitere Gitterstrukturen 3 montiert werden. Die Drehbarkeit der montierten Gitterstrukturen 3 erlaubt, indem benachbarte Gitterstrukturen 3 weggeschwenkt werden, ein bequemes Arbeiten bei der Kabelmontage an einer einzelnen Gitterstruktur 3.

Figur 6 zeigt Gitterstrukturen 3, deren Querstege 32 an den Enden mit hakenförmigen Biegungen 321 versehen sind, mittels denen die Gitterstrukturen 3 in ein Montageteil 1" eingehängt sind. Das Montageteil 1" weist waagrecht verlaufende, parallel zueinander angeordnete Stäbe auf, deren Abstand vorzugsweise entsprechend einem ganzzahligen Vielfachen des Abstandes zwischen den Querstegen 32 gewählt ist. Als Montageteil 1" kann daher vorteilhaft auch ein Gitter verwendet werden. Zur Verbindung der Gitterstrukturen 3 mit den Montageteile 1; 1', 1" sind weitere Verbindungsvorrichtungen, beispielsweise Scharniere verwendbar.

Die erfindungsgemässe Befestigungsvorrichtung, die vorzugsweise in Steigzonen, jedoch auch in Boden- oder Deckenbereichen verwendbar ist, wurde in bevorzugten Ausgestaltungen beschrieben und dargestellt. Anhand der erfindungsgemässen Prinzipien sind weitere fachmännische Ausgestaltungen realisierbar. Insbesondere sind verschiedenartige ausgestaltete Gitterstrukturen 3 verwendbar, die an die zu verlegenden Kabel 90, 91, 92, 93 und an die Raumverhältnisse im Installationsbereich angepasst werden können. Vorteilhaft sind auch Gitterstrukturen 3 mit zwei oder mehreren Flügeln einsetzbar, von denen wenigstens einer gelenkig mit einem benachbarten Flügel verbunden ist. Beispielsweise kann an ein aussen liegender Flügel, der über ein Scharnier mit einem weiteren Flügel verbunden ist, in der Art einer Tür zum Öffnen und Schliessen eines durch die Gitterstrukturen 3 gebildeten Kanals verwendet werden. Die Elemente der Gitterstrukturen 3 können ferner aus beschichtetem oder unbeschichtetem Stahl oder aus Kunststoff gefertigt sein.

## Patentansprüche

1. Vorrichtung zur Befestigung von Kabel (90, 91, 92), Kabelleiter, Kabelbahn oder Kabelkanal, mit einem oder mehreren Montageteilen, wie zueinander parallel angeordnete Sprossen (1), einem Blech (1') oder einem Gitter (1"), die mit einem Gebäudeteil verbindbar sind, und an denen gegebenenfalls Kabel (90, 91, 92) befestigbar sind, **dadurch gekennzeichnet, dass** das wenigstens eine Montageteil (1; 1', 1") fest oder gelenkig mit wenigstens einer aus Längsstegen (31) sowie Querstegen (32) bestehenden Gitterstruktur (3) derart verbunden ist, dass die Gitterstruktur (3), an der Kabel (90, 91, 92) befestigbar sind, ganz oder teilweise in den vor den Montageteilen (1; 1', 1'') liegenden, für die Verlegung der Kabel (90, 91, 92) vorgesehenen Raum hineinragt.

2. Vorrichtung nach Anspruch 1, **dadurch gekennzeichnet, dass** die Querstege (32) ein- oder mehrfach gekrümmt sind, so dass die Gitterstruktur (3) wenigstens zwei gegeneinander geneigte, der Befestigung der Kabel (90, 91, 92) dienende Flügel (A, B) gleicher oder unterschiedlicher Länge aufweist, von denen einer mit den Montageteilen (1; 1', 1" ) verbindbar ist und der andere in den für die Verlegung der Kabel (90, 91, 92) vorgesehenen Raum hineinragt.

3. Vorrichtung nach Anspruch 1 oder 2, **dadurch gekennzeichnet, dass** die Montageteile (1; 1', 1") beidseits mittels vorzugsweise L-Profil-förmigen Seitenprofilen (2) gehalten sind.

4. Vorrichtung nach Anspruch 1, 2 oder 3, **dadurch gekennzeichnet, dass** die Längsstege (31) oder die Querstege (32) der Gitterstruktur (3) in Öffnungen oder Haken (15', 25' ; 14) der Montageteile (1; 1', 1'') einführbar und vorzugsweise mittels eines dadurch gebildeten Presssitzes fixierbar sind.

5. Vorrichtung (1) nach Anspruch 2, 3 oder 4, **dadurch gekennzeichnet, dass** die Längsstege (31) der montierten Gitterstruktur (3) zumindest annähernd parallel und die Querstege (32) der montierten Gitterstruktur (3) zumindest annähernd senkrecht zu den Seitenprofilen (2, 2') verlaufen und/oder dass die beiden Flügel (A, B) einen Winkel von 90° einschliessen oder gegeneinander schwenkbar sind.

6. Vorrichtung nach einem der Ansprüche 4 oder 5, **dadurch gekennzeichnet, dass** einander benachbarte Haken (14) einen festen gegenseitigen Abstand aufweisen, der einem Grundmass a entspricht, und in gleicher Richtung parallel oder quer zu den Seitenprofilen (2) ausgerichtet sind oder dass die Gitterstruktur (3) Verbindungselemente (321) aufweist, die mit den Montageteilen (1; 1', 1"), vorzugsweise einem Gitter (1") verbindbar sind.

7. Vorrichtung nach Anspruch 6, **dadurch gekennzeichnet, dass** wenigstens an einem Flügel (A bzw. B) der Gitterstruktur (3) zwei oder mehrere Längsstege (31) angeordnet sind, von denen zwei oder mehrere der Längsstege (31) einen gegenseitigen Abstand aufweisen, der dem Grundmass (a) oder einem ganzzahligen Vielfachen davon entspricht.

8. Vorrichtung nach einem der Ansprüche 4 bis 7, **dadurch gekennzeichnet, dass** die Montageteile U-Profil-förmige Sprossen (1) sind, die ein Mittelstück (11) aufweisen, durch das zwei je mit einer Reihe von Haken (14) versehene Seitenstücke (12, 13) miteinander verbunden sind.

9. Vorrichtung nach einem der Ansprüche 1 bis 8, **dadurch gekennzeichnet, dass** die Mittelstücke (11) und/oder Seitenstücke (12, 13) der als Montageteile dienenden Sprossen (1) mit Öffnungen (15) versehen sind, in die Arretierelemente (50, 51) für die montierte Gitterstruktur (3), Montageelemente (50, 51) für weitere Vorrichtungen, gegebenenfalls Informationstafeln, oder der Verbindung mit den Seitenprofilen (2) dienende Verbindungselemente einführbar sind.

10. Vorrichtung nach einem der Ansprüche 1 bis 9, **dadurch gekennzeichnet, dass** die Länge der Längsstege (31) wenigstens dem Abstand (c) zwischen zwei benachbarten Montageteilen (1) entspricht.

11. Vorrichtung nach einem der Ansprüche 2 bis 10, **dadurch gekennzeichnet, dass** die Gitterstrukturen (3) I-, L-, U-oder Z-förmig ausgestaltet sind und/oder aus runden oder abgekanteten, gegebenenfalls mit Kunststoff beschichteten Längs- und oder Querstegen (31, 32) besteht.
